# EUROPEAN PATENT APPLICATION

(11) **EP 1 283 226 A1**
(43) Date of publication of application: **12.02.2003**
(21) Application number: 01202902.1
(22) Date of filing: 31.07.2001
(51) Int. Cl.: C08F 220/10, C09D 133/06

(54) **Hydroxyl-functional copolymer and coating compositions formed therewith**

(71) Applicant: Resolution Research Nederland B.V., 1031 CM Amsterdam (NL)
(72) Inventor: The designation of the inventor has not yet been filed
(74) Representative: Wittop Koning, Tom Hugo

(57) **Abstract**

Coating compositions which provide scratch resistant and acid resistant coating films, having a Tg in the range of from 1 to 70°C and which comprise a hydroxyl containing copolymer and a cross-linking agent, wherein the hydroxyl containing copolymer has a weight average molecular weight in the range of from 9000 to 30,0000, has an OH concentration of 3.5 to 5 wt% relative to the total weight of all comonomers, and has a Tg of from 0 to 35°C and is obtainable by free radical copolymerization of
(a) a glycidyl ester of an α-branched alkane carboxylic acid (a'), the acid moiety of which contains 9 to 13 carbon atoms, in an amount of from 0 to 40 wt% and preferably from 10 to 25 wt%, relative to the total mass of all comonomers and/or a vinyl ester of an α-branched alkane carboxylic acid (a''), the acid moiety of which contains 9 to 13 carbon atoms, in an amount of from 0 to 40 wt%, relative to the total mass of all components, wherein the total amount of (a') and (a'') is between 5 and 55wt% relative to the total mass of all components, and
(b) acrylic acid, which optionally is α-substituted by an alkyl group of from 1 to 3 carbon atoms, in an amount of from 0.7 to 12 wt%. relative to the total mass of all comonomers, and
(c) alkyl acrylate and optionally an alkyl methacrylate, the alkyl of which contains from 1 to 6 carbon atoms, and preferably from 1 to 4 carbon atoms, in a total amount of from 4 to 65 wt% (this, if c covers the amount of BA and MMA) relative to the total mass of all comonomers, and
(d) styrene, divinylbenzene, α-methylstyrene, vinylnaphtalene or alkyl substituted styrene, the alkyl of which contains from 1 or 2 carbon atoms, in an amount of from 15 to 30 wt%, relative to the total mass of all comonomers, and
(e) optionally a hydroxyalkyl acrylate and/or hydroxyalkyl methacrylate, wherein the alkyl residue contains from 1 to 4 carbon atoms, and preferably 2 carbon atoms, in an amount of from 5 to 38 wt% relative to the total mass of all comonomers,
and wherein the sum of the weight percentages of the amounts of components (a) - (e) is always 100%, and wherein the hydroxyl group concentration in the copolymer component is in the range of from 115.5 to 165 mg KOH/g copolymer,
and wherein the weight ratio between said hydroxyl containing copolymer and the cross-linking agent is in the range of from 90/10 to 60/40;
and cured coating films derived from said coating compositions.

## Description

The present invention relates to copolymers for use in scratch resistant and acid resistant coating compositions and to scratch resistant and acid resistant coating films, derived therefrom. More in particular, the invention relates to copolymers for use in scratch resistant and acid resistant original equipment manufacture (OEM) automotive coatings.

The need for such coating compositions has been recognized for several years and many research efforts, starting from a great variety of different approaches, have been made to their development which appears from e.g. WO 98/24856, WO 97/22647, NO 99/33915, WO 96/34905 and US 4,960,828.

From these publications it can be derived that for the herein proposed coating compositions either expensive silicon containing comonomers were used or a great number of different constituents and/or chemistries, which makes the resin preparation longer or more complex whereas there has not always been reached a presently required balance between scratch resistance and acid resistance, which, from earlier experimentation, have seemed to be counter active.

It will be appreciated that due to still increasing requirements of modern coating industry and in particular the automotive coating industry, there is a strong aim to further improved coatings which moreover must be supplied at economically acceptable cost prices.

It is therefore an object of the present invention to provide coating compositions, which have an acceptable balance between scratch resistance and acid resistance, good overall coating properties and which have been composed by a restricted number of rather simple constituents and at economically acceptable cost price.

As results of extensive research and experimentation said coating compositions aimed at, have now surprisingly been found.

Accordingly, the present invention relates to coating compositions which provide scratch resistant and acid resistant coating films, having a Tg in the range of from 1 to 70°C and which comprise a hydroxyl containing copolymer and a cross-linking agent, wherein the hydroxyl containing copolymer has a weight average molecular weight in the range of from 9000 to 30,0000, has an OH concentration of 3.5 to 5 wt% relative to the total weight of all comonomers, and has a Tg of from 0 to 35°C and is obtainable by free radical copolymerization of
(a) a glycidyl ester of an α-branched alkane carboxylic acid (a'), the acid moiety of which contains 9 to 13 carbon atoms, in an amount of from 0 to 40 wt% and preferably from 10 to 25 wt%, relative to the total mass of all comonomers and/or a vinyl ester of an α-branched alkane carboxylic acid (a''), the acid moiety of which contains 9 to 13 carbon atoms, in an amount of from 0 to 40 wt%, relative to the total mass of all components, wherein the total amount of (a') and (a'')is between 5 and 55wt% relative to the total mass of all components, and
(b) acrylic acid, which optionally is α-substituted by an alkyl group of from 1 to 3 carbon atoms, in an amount of from 0.7 to 12 wt% relative to the total mass of all comonomers, and
(c) alkyl acrylate and optionally an alkyl methacrylate, the alkyl of which contains from 1 to 6 carbon atoms, and preferably from 1 to 4 carbon atoms, in a total amount of from 4 to 65 wt% (this, if c covers the amount of BA and MMA)relative to the total mass of all comonomers, and
(d) styrene, divinylbenzene, α-methylstyrene, vinylnaphtalene or alkyl substituted styrene, the alkyl of which contains from 1 or 2 carbon atoms, in an amount of from 15 to 30 wt%, relative to the total mass of all comonomers, and
(e) optionally a hydroxyalkyl acrylate and/or hydroxyalkyl methacrylate, wherein the alkyl residue contains from 1 to 4 carbon atoms, and preferably 2 carbon atoms, in an amount of from 5 to 38 wt% relative to the total mass of all comonomers,
and wherein the sum of the weight percentages of the amounts of components (a) - (e) is always 100%, and wherein the hydroxyl group concentration in the copolymer component is in the range of from 115.5 to 165 mg KOH/g copolymer,
and wherein the weight ratio between said hydroxyl containing copolymer and the cross-linking agent is in the range of from 90/10 to 60/40.

Preferably said weight ratio between said hydroxyl containing copolymer and the cross-linking agent is in the range of from 80/20 to 70/30.

Particularly suitable monomers of the group (a') are commercially available glycidyl esters of α,α-branched acids such as CARDURA E10 glycidyl ester (CARDURA E10 is a trademark).

Particularly suitable monomers of the group (c) are selected from methyl-, ethyl-, propyl-, isopropyl-, n-butyl- and isobutyl esters of acrylic acid or methacrylic acid.

More preferred are methyl acrylate, methyl methacrylate, ethyl acrylate, ethyl methacrylate, n-butyl acrylate or n-butyl methacrylate.

A preferred monomer for component (d) is styrene.

Particularly suitable monomers of the group (e) are selected from hydroxy ethyl acrylate, hydroxy ethyl methacrylate, hydroxy n-propyl acrylate, hydroxy n-propyl methacrylate, hydroxy isopropyl acrylate, hydroxy isopropyl methacrylate, hydroxy n-butyl acrylate, hydroxy n-butyl methacrylate, hydroxy isobutyl acrylate or hydroxy isobutyl methacrylate.

A preferred monomer is hydroxy ethyl acrylate.

Suitable polymerization initiators to be used for free radical copolymerization include any of the conventional free radical forming compounds, individually or in a mixture.

Examples of such compounds are aliphatic azo compounds, diacyl peroxides, peroxy-dicarbonates, alkyl per-esters, alkyl hydroperoxides, per ketals, dialkyl peroxides or ketone peroxides.

Dialkyl peroxides, such as di-tert-butyl peroxide, di-tert-amyl peroxide, and alkyl per esters such as tert-butyl peroxy-2-ethylhexanoate or tert-amyl peroxy-2-ethylhexanoate are preferred.

The concentration of initiator may be e.g. in the range of from 1 to 6 wt% and preferably of from 1 to 4 wt%, based on the total mass of the comonomers.

The copolymerization can be carried out in bulk or in a solution of the comonomers in an inert solvent, e.g. in amounts of from 0 to 15 wt%.

Suitable cross-linking agents to be applied in the coating compositions of the present invention can be selected in general from formaldehyde adducts derived from urea, melamine and benzoguanamine, or the etherified formaldehyde-amine adducts. Preferred cross-linking agents are the melamine-formaldehyde adducts partially or completely etherified with aliphatic alcohols having 1 to 4 carbon atoms.

Examples of such commercially available curing agents are MAPRENAL MF900, VMF3296 and CYMEL 303, 327 and 1158 (MAPRENAL, VMF and CYMEL are trademarks).

The hereinbefore specified cross-linking agents can optionally be mixed with blocked isocyanate groups containing compounds.

Polyisocyanate may be aliphatic, cycloaliphatic, or heterocyclic and may be substituted or unsubstituted.

The polyisocyanate is preferably a fully-capped (blocked) polyisocyanate with substantially no free isocyanate groups. The polyisocyanate is preferably aliphatic. Diisocyanates are preferred, although higher polyisocyanates can be used in place of or in combination with diisocyanates. Examples of suitable aliphatic diisocyanates are straight chain aliphatic diisocyanates such as 1,4-tetramethyene diisocyanate and 1,6-hexamethylene diisocyanate, and isocyanurates thereof. Also, cycloaliphatic diisocyanates can be employed. Examples include isophorone diisocyanate, isocyanurates of isophorone diisocyanate, and 4,4'-methylene-bis-(cyclohexyl isocyanate), and Metaxylylene diisocyanate. Suitable capping or blocking agents include those well known in the art such as pyrazoles as those described in U.S. Patent No, 5,352,755, alcohols , oximes (which are preferred), malonic esters, phenols, amines, and the like.

The cross-linking can be catalyzed by addition of an organometallic compound, such as tin compounds, and if desired tertiary amines, preferably diethyl ethanol amine. Examples of appropriate tin compounds are di-butyl tin di-laurate, di-butyl tin acetate and di-butyl oxo-tin.

More preferred embodiments of said coating compositions are those, comprising copolymers obtainable from
(a) a glycidyl ester of an α-branched alkane carboxylic acid (a'), wherein the acid moiety contains 10 carbon atoms, in an amount of from 5 to 40 wt%, and preferably in an amount 10 to 25 wt%, relative to the total mass of all comonomers, and
(b) acrylic acid, in an amount of from 1.5 to 12 wt% relative to the total mass of all comonomers, and
(c) butyl acrylate and/or methyl methacrylate, in an amount of from 10 to 42 wt%, relative to the total mass of all comonomers, and
(d) styrene, in an amount of from 15 to 30 wt%, relative to the total mass of all comonomers, and
(e) hydroxyethyl acrylate, in an amount of from 5 to 38 wt%, relative to the total mass of all comonomers, and wherein the sum of the weight percentages of the amounts of components (a) - (e) is always 100%.

Preferred hydroxyl containing copolymers have a weight average molecular weight from 10,000 to 35,000.

It will be appreciated that another aspect of the present invention is formed by the hydroxyl containing copolymer to be used in coating compositions, which provide scratch resistant and acid resistant coating films after curing, while maintaining other relevant physical properties such as hardness, MEK resistance and flexibility (measured as slow penetration).

Another aspect of the present invention is formed by the cured coating films derived from the hereinbefore defined coating compositions and applied on a shaped substrate, and more in particular on automotives.

It has been found that the final physical and chemical properties of the cured coating films and in particular the scratch resistance and acid resistance, are only dependant on the types and the mutual weight fractions of the comonomers (a)-(e) and the type and amount of the initiator and not on the way of addition of these respective comonomers (a)-(e).

The scratch resistance as referred to throughout the present specifications, was measured according to an adapted version of the test method ASTM D2486 for determination of wet scratch resistance titled "Standard test method scrub resistance of wall paints, Wet scrub resistance".

Recommendations given in the article "Micro and nano-indentation and scratching for evaluating the mar resistance of automotive clearcoats" by Dr J.L. Courter were also taken as reference to set up the following test method:
The Q panel (300x120 mm) is firstly coated with a black base coat from ICI AUTOCOLOR. The black base coat is based on:
450 g of P967-9948 (resin + black pigment), 50 g of P935-2018 (activator) and 9 g of P275-366 (additive).
The clear coat is applied wet on wet to the black panel. The coating is then cured for 30 minutes at 140°C.
After full curing (1 and 4 days), the initial gloss is measured. Then it is rinsed with water and "dapped dry" with paper. The panel is mounted on a glass plate in a wet abrasion scrub tester (washability machine from Braive instruments).
It is then scrubbed with a nylon brush and an abrasive media. The nylon brush is rinsed with water before using. The abrasive slurry consists of : 6 wt% of sand (Minex 4), 5 wt% if isopropanol and 89 wt% of deionized water. The abrasive slurry is mixed 10 minutes before being used. The total normal force on the coating is 438g. 5 ml of the slurry is placed on the panel. The tester is started and the brush is moved back and forth 10 times. The stroke frequency is 37 cycles per minute. The panel is removed, rinsed with deionized water and "dapped dry" with a paper. The damage is assessed by measuring the gloss retention.
4 coated panels of each system are abraded. Gloss retention is measured for each panel in the following way:
The specular gloss is determined according to the test method ISO 2813-94. Using a reflectometer geometry of 20°, the specular gloss of the coating is measured before the abrasion and on the abraded area after 1 hour and 7 days abrasion date. The gloss is measured at six locations along the length of the damaged area. The six values are averaged to give the panel gloss. The gloss retention is calculated from the gloss before abrasion and the gloss after abrasion ((gloss after the abrasion x100)/initial gloss). This method gives a reproducibility of 3.5% and it has been recognised that a minimum of 77% in gloss retention is needed to consider the coating as scratch resistant.
The acid resistance of the coating is determined by exposing the film to droplets f 0.6N sulfuric acid for 30, 60 and 90 min at 50°C in a ventilated oven. After exposure the panels are rinsed and dried. The evaluation is done 24h after exposure : 0 = minimum ; 30 = maximum.

Standard physical properties, such as Konig hardness, Tg, direct and reverse impact strength, slow penetration and MEK resistance of the coatings are measured in accordance with methods known to persons skilled in the art. A minimum value of 16 for acid resistance, a minimum value of 7.5 mm for slow penetration, A MEK resistance > 100 double rubs are considered to be required for obtaining an acceptable coating.

Although the hereinbefore described coating compositions are preferably used as clear top OEM coatings, they can also be used as pigmented intermediate top coatings. Such compositions comprise auxiliaries and additives conventional in coating technology.

These include, in particular, pigments such as iron oxides, lead oxides, lead silicates, titanium dioxide, barium sulphate, zinc sulphide and phthalocyanine complexes, fillers such as talk, mica, kaolin, chalk, ground quartz, ground asbestos, ground slate, various silicic acids and silicates, catalysts, levelling agents, silicone oils, plasticizers such as phosphates or phtalates, viscosity-controlling additives, flatting agents, UV absorbers, light stabilizers, antioxidants, peroxide-decomposing additives, antifoams, wetting agents and active diluents-reactive diluents.

The coating compositions can be applied to any desired substrate by any desired methods, for example, by brushing, dipping, flowcoating or using rollers or blades, but in particular by spraying. It is also possible to apply the coating compositions at elevated pressure and temperature.

The coating compositions according to the present invention are generally cured within the temperature range of from 90 to 150°C and preferably in the range of from 100 to 140°C.

The invention is illustrated in more detail in the following examples, however without restricting its scope to these specific embodiments. All percentages are contents by mass weight and all parts are parts by mass weight, unless expressly stated otherwise.

### Example 1

The hydroxyl containing copolymers were prepared by charging an amount of 100 g CARDURA E10 glycidyl ester (CARDURA is a trademark) and 115 g of xylene in a 3 liter round bottom glass reactor, equipped with reflux condenser, thermocouple, anchor stirrer and nitrogen purge, which had been flushed with nitrogen and heating up to the reaction temperature of 140°C under nitrogen. A monomer feed mixture comprising:

| | |
|---|---|
| acrylic acid (AA) | 30.0 g |
| Hydroxyethyl acrylate (HEA) | 88.2 g |
| Styrene | 133.5 g |
| butyl acrylate (BA) | 148.3 g |
| Initiator di-tert-amylperoxide (DTAP) (see also Table 1 for percentages) | 7.5 g |

was gradually added over a period of 4 hours at a constant temperature of from 140 to 145°C, under constant stirring and under a light nitrogen flow.
When the feed was completed, 5 g of DTAP dissolved in 10 g of xylene were added over a period of 2 hours at a constant temperature of 140°C. When the post reaction was finished, 208 g of butyl acetate were added to lower the resin solids content to approx. 60 wt%.
The resin was then cooled down and characterized, as shown in Table 2

Example 2 In the same way as described in Example 1 with the percentages indicated in Table 1

### Example 2

The hydroxyl containing copolymers were prepared by charging an amount of 200 g CARDURA E10 glycidyl ester (CARDURA is a trademark) and 115 g of xylene in a 3 liter round bottom glass reactor, equipped with reflux condenser, thermocouple, anchor stirrer and nitrogen purge, which had been flushed with nitrogen and heating up to the reaction temperature of 140°C under nitrogen. A monomer feed mixture comprising:

| | |
|---|---|
| acrylic acid | 60.0 g |
| Hydroxyethyl acrylate | 39.9 g |
| Styrene | 92.3 g |
| butyl acrylate | 107.9 g |
| Initiator di-tert-amylperoxide (DTAP) (see also Table 1 for percentages) | 7.5 g |

was gradually added over a period of 4 hours at a constant temperature of from 140 to 145°C, under constant stirring and under a light nitrogen flow.
When the feed was completed, 5 g of DTAP dissolved in 10 g of xylene were added over a period of 2 hours at a constant temperature of 140°C. When the post reaction was finished, 208 g of butyl acetate were added to lower the resin solids content to approx. 60 wt%.
The resin was then cooled down and characterized, as shown in Table 2.

### Comparative examples (A), and (B)

In the same way as described in Example 1 a hydroxyl containing copolymer was prepared from the monomers as specified in Table 1.
The resin characteristics are shown in Table 2.

Clear coating compositions were prepared using CYMEL 1158 as cross-linker in a copolymer/cross-linker weight ratio of 70/30, and dibutyl tin di-laurate (DBTL) as catalyst in an amount of 0.01 wt% relative to the total weight of the total composition.

The coatings were applied on standard Q panels (dry thickness = 50 µm) and cured for 30 minutes at 140°C.

Standard properties such as VOC level, König hardness, acid resistance and flexibility were determined, as listed in Table 3.

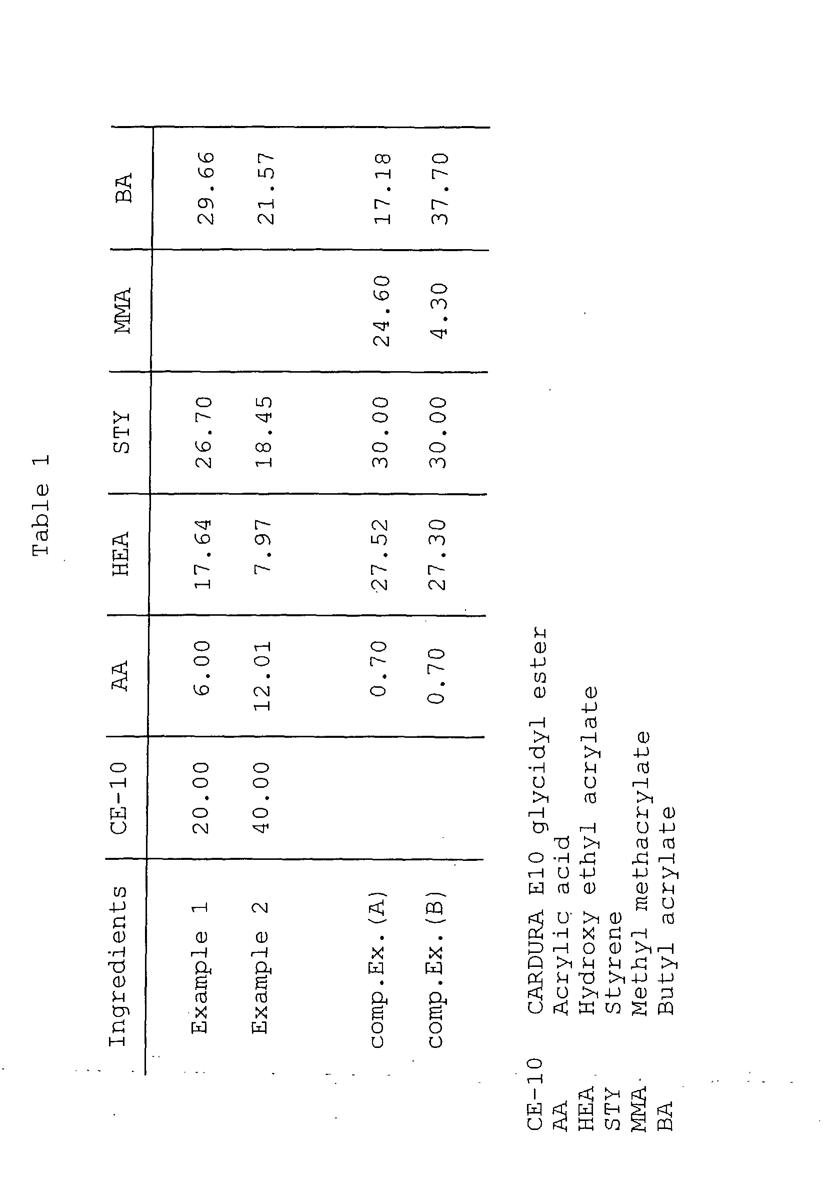

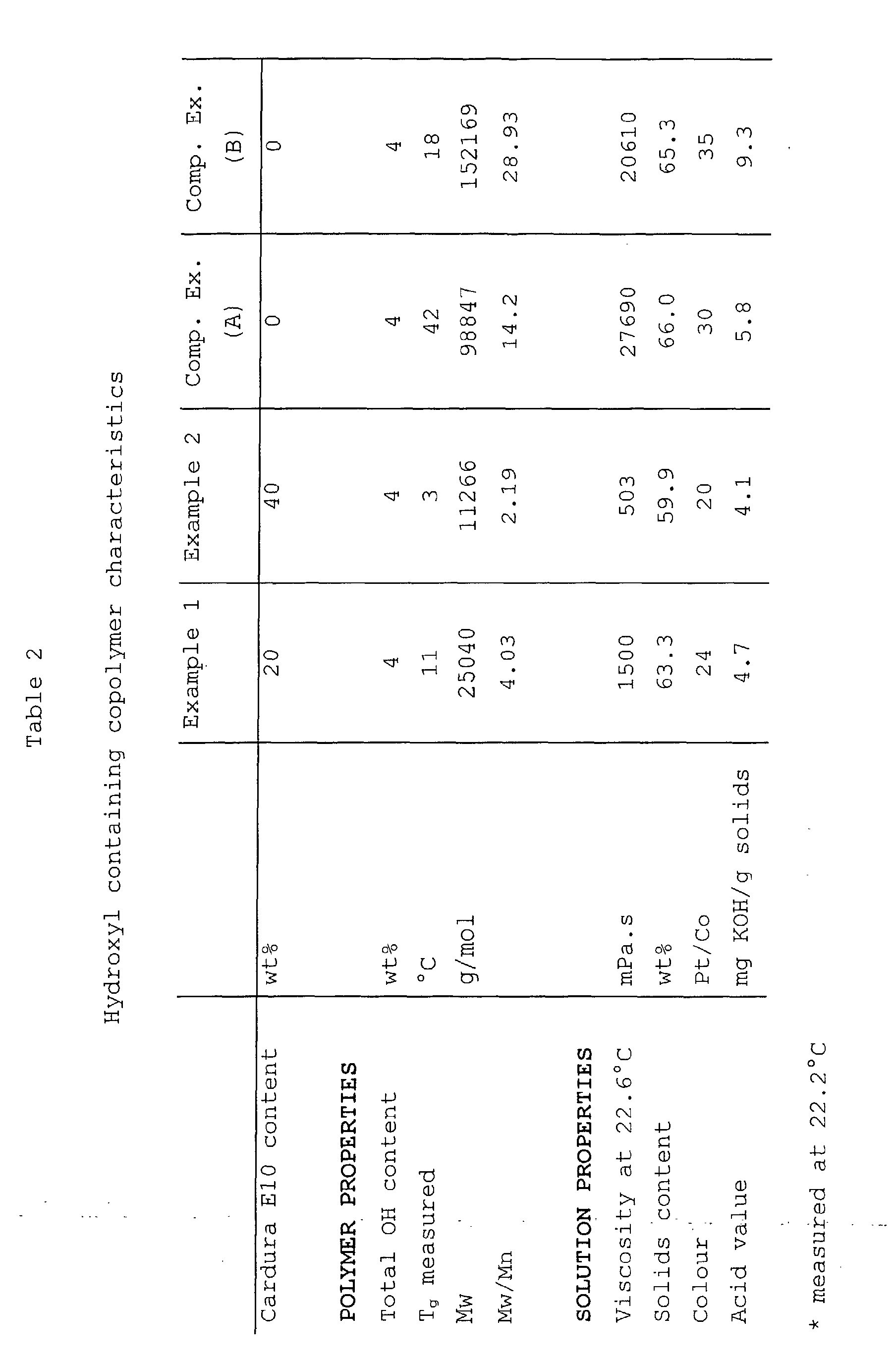

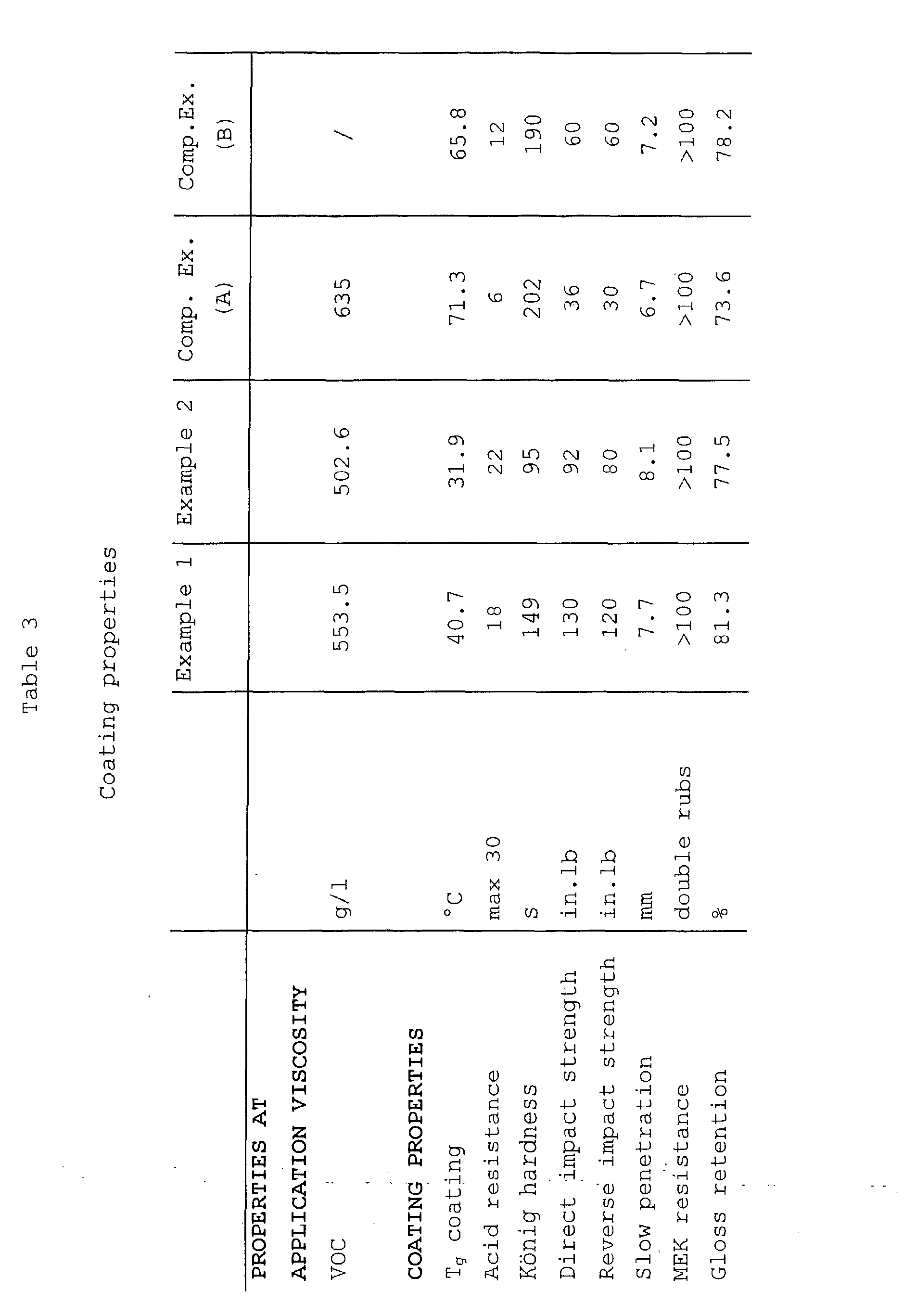

## Claims

1. Coating compositions which provide scratch resistant and acid resistant coating films, having a Tg in the range of from 1 to 70°C and which comprise a hydroxyl containing copolymer and a cross-linking agent, wherein the hydroxyl containing copolymer has a weight average molecular weight in the range of from 9000 to 30,0000, has an OH concentration of 3.5 to 5 wt% relative to the total weight of all comonomers, and has a Tg of from 0 to 35°C and is obtainable by free radical copolymerization of
(a) a glycidyl ester of an α-branched alkane carboxylic acid (a'), the acid moiety of which contains 9 to 13 carbon atoms, in an amount of from 0 to 40 wt% and preferably from 10 to 25 wt%, relative to the total mass of all comonomers and/or a vinyl ester of an α-branched alkane carboxylic acid (a''), the acid moiety of which contains 9 to 13 carbon atoms, in an amount of from 0 to 40 wt%, relative to the total mass of all components, wherein the total amount of (a') and (a'')is between 5 and 55wt% relative to the total mass of all components, and
(b) acrylic acid, which optionally is α-substituted by an alkyl group of from 1 to 3 carbon atoms, in an amount of from 0.7 to 12 wt% relative to the total mass of all comonomers, and
(c) alkyl acrylate and optionally an alkyl methacrylate, the alkyl of which contains from 1 to 6 carbon atoms, and preferably from 1 to 4 carbon atoms, in a total amount of from 4 to 65 wt% (this, if c covers the amount of BA and MMA)relative to the total mass of all comonomers, and
(d) styrene, divinylbenzene, α-methylstyrene, vinylnaphtalene or alkyl substituted styrene, the alkyl of which contains from 1 or 2 carbon atoms, in an amount of from 15 to 30 wt%, relative to the total mass of all comonomers, and
(e) optionally a hydroxyalkyl acrylate and/or hydroxyalkyl methacrylate, wherein the alkyl residue contains from 1 to 4 carbon atoms, and preferably 2 carbon atoms, in an amount of from 5 to 38 wt% relative to the total mass of all comonomers, and
wherein the sum of the weight percentages of the amounts of components (a) - (e) is always 100%, and wherein the hydroxyl group concentration in the copolymer component is in the range of from 115.5 to 165 mg KOH/g copolymer, and wherein the weight ratio between said hydroxyl containing copolymer and the cross-linking agent is in the range of from 90/10 to 60/40.

2. Coating compositions of claim 1 wherein the weight ratio between the hydroxyl containing copolymer and the cross-linking agent is in the range of from 80/20 to 70/30.

3. Coating compositions of claims 1 or 2, wherein as component (c) methyl acrylate, methyl methacrylate, ethyl acrylate, ethyl methacrylate, n-butyl acrylate or n-butyl methacrylate is used.

4. Coating compositions of claims 1 to 4, wherein as component (d) styrene is used.

5. Coating compositions of claims 1 to 3, wherein as component (e) hydroxy ethyl acrylate is used.

6. Coating compositions of claims 1 to 5, wherein as polymerization initiator di-tert-butyl peroxide, di-tert-amyl peroxide, tert-butyl peroxy-2-ethylhexanoate or tert-amyl peroxy-2-ethylhexanoate is used.

7. Coating compositions of claims 1 to 6, wherein the concentration of the initiator is in the range from 1 to 4 wt%, based on the total mass of the monomers.

8. Coating compositions according to claims 1 to 7, wherein as cross-linking agents melamine-formaldehyde adducts partially or completely etherified with aliphatic alcohols having 1 to 4 carbon atoms are used.

9. Coating compositions according to claims 1 to 8, comprising copolymers obtainable from
(a) a glycidyl ester of an α-branched alkane carboxylic acid (a'), wherein the acid moiety contains 10 carbon atoms, in an amount of from 5 to 40 wt%, and preferably in an amount 10 to 25 wt%, relative to the total mass of all comonomers, and
(b) acrylic acid, in an amount of from 1.5 to 12 wt% relative to the total mass of all comonomers, and
(c) butyl acrylate and/or methyl methacrylate, in an amount of from 10 to 42 wt%, relative to the total mass of all comonomers, and
(d) styrene, in an amount of from 15 to 30 wt%, relative to the total mass of all comonomers, and
(e) hydroxyethyl acrylate, in an amount of from 5 to 38 wt%, relative to the total mass of all comonomers, and wherein the sum of the weight percentages of the amounts of components (a) - (e) is always 100%.

10. Coating compositions according to claims 1 and 2, wherein the hydroxyl containing copolymers have a weight average molecular weight from 10,000 to 35,000.

11. Cured coating films derived from the coating compositions according to claims 1 to 10.

12. Cured coating films according to claim 11 and cured within the temperature range of from 100 to 140°C.

13. Hydroxyl containing copolymer to be used in coating compositions, which provide scratch resistant and acid resistant coating films after curing, while maintaining other relevant physical properties, such as hardness, MEK resistance and flexibility, having a weight average molecular weight in the range of from 9000 to 300000, has an OH concentration of 3.5 to 5 wt% relative to the total weight of all comonomers, and has a Tg of from 0 to 35°C and is obtainable by free radical copolymerization of
(a) a glycidyl ester of an α-branched alkane carboxylic acid (a'), the acid moiety of which contains 9 to 13 carbon atoms, in an amount of from 0 to 40 wt% and preferably from 10 to 25 wt%, relative to the total mass of all comonomers and/or a vinyl ester of an α-branched alkane carboxylic acid (a''), the acid moiety of which contains 9 to 13 carbon atoms, in an amount of from 0 to 40 wt%, relative to the total mass of all components, wherein the total amount of (a') and (a'') is between 5 and 55wt% relative to the total mass of all components, and
(b) acrylic acid, which optionally is α-substituted by an alkyl group of from 1 to 3 carbon atoms, in an amount of from 0.7 to 12 wt% relative to the total mass of all comonomers, and
(c) alkyl acrylate and optionally an alkyl methacrylate, the alkyl of which contains from 1 to 6 carbon atoms, and preferably from 1 to 4 carbon atoms, in a total amount of from 4 to 65 wt% (this, if c covers the amount of BA and MMA) relative to the total mass of all comonomers, and
(d) styrene, divinylbenzene, α-methylstyrene, vinylnaphtalene or alkyl substituted styrene, the alkyl of which contains from 1 or 2 carbon atoms, in an amount of from 15 to 30 wt%, relative to the total mass of all comonomers, and
(e) optionally a hydroxyalkyl acrylate and/or hydroxyalkyl methacrylate, wherein the alkyl residue contains from 1 to 4 carbon atoms, and preferably 2 carbon atoms, in an amount of from 5 to 38 wt% relative to the total mass of all comonomers,
and wherein the sum of the weight percentages of the amounts of components (a) - (e) is always 100%, and wherein the hydroxyl group concentration in the copolymer component is in the range of from 115.5 to 165 mg KOH/g copolymer.
